# NEUE EUROPÄISCHE PATENTSCHRIFT

(11) **EP 2 463 009 B2**
(45) Veröffentlichungstag und Bekanntmachung des Hinweises auf die Entscheidung über den Einspruch: **13.04.2022**
(45) Hinweis auf die Patenterteilung: 03.04.2019
(21) Anmeldenummer: 11191036.0
(22) Anmeldetag: 29.11.2011
(51) Int. Cl.: B01D 46/10, B01D 46/52, B01D 46/00, B60H 3/06

(54) **FILTERANORDNUNG**
FILTER ASSEMBLY
ENSEMBLE FILTRE

(30) Priorität: 08.12.2010 DE 102010053758
(43) Veröffentlichungstag der Anmeldung: 13.06.2012
(73) Patentinhaber: MANN+HUMMEL GmbH, 71636 Ludwigsburg (DE)
(72) Erfinder: Orendt, Stefan, 95512 Neudrossenfeld (DE); Schoen, Mario, 95482 Gefrees (DE); Atilgan, Emrullah, 95460 Bad Berneck (DE)
(74) Vertreter: Mann + Hummel Intellectual Property

(56) Entgegenhaltungen:
- EP-A1- 1 254 694
- EP-A1- 2 108 432
- EP-A1- 2 397 211
- EP-A1- 2 409 751
- WO-A1-03/059491
- DE-A1-102007 057 384
- DE-A1-102008 022 630
- DE-B3-102005 048 841
- DE-U1-202005 019 611
- JP-A- H09 136 536
- JP-A- 2001 063 357
- JP-A- 2005 007 361
- US-A1- 2006 201 120

## Beschreibung

### Technisches Gebiet

Die Erfindung betrifft eine Filteranordnung mit einem Filterelement, wie zum Beispiel einen Innenraumluftfilter für ein Kraftfahrzeug.

### Stand der Technik

Ein entsprechendes Filterelement dient der Filterung von Fluidströmungen oder insbesondere gasförmigen Medien, beispielsweise zur Filterung einer Luftströmung, die dem Fahrzeuginnenraum eines Kraftfahrzeugs zugeführt wird. Obwohl auf beliebige Filterelemente und -anordnungen anwendbar, wird die vorliegende Erfindung sowie die ihr zugrunde liegende Problematik nachfolgend für ein Filterelement zur Filterung von Luft für den Innenraum eines Kraftfahrzeugs beschrieben. Solche Filter werden nachfolgend auch kurz als KFZ-Innenraumluftfilter oder auch Innenraumfilter bzw. Kabinenluftfilter bezeichnet.

Die zunehmende Luftverunreinigung, insbesondere in Großstädten, in Verbindung mit dem Einsatz moderner Klimaanlagen macht es wünschenswert und auch erforderlich, die von außen in den Innenraum eines Kraftfahrzeuges geleitete und aufbereitete bzw. klimatisierte Luft mittels geeigneter Filter zu reinigen. Hierfür kommen beispielsweise Partikelfilter, Geruchsfilter oder deren Kombination miteinander in Betracht, die in der Luft enthaltene Schwebstoffe, Partikel und Gerüche aus der Umgebungsluft möglichst gut herausfiltern bzw. absorbieren sollen. Solche Filter zur Filterung von Luft für den Innenraum eines Kraftfahrzeuges sind in einer Vielzahl von Ausführungsformen und Varianten allgemein bekannt, so dass auf deren Aufbau und Funktionsweise nachfolgend nur kurz eingegangen wird.

Da die Wirksamkeit von Filtern insbesondere von der Größe der von der Luft durchströmten Oberfläche des Filters abhängig ist, kommen für Kfz-Innenraumluftfilter überwiegend zickzackförmig gefaltete Filtermedien, die auch als plissierte Filtermedien bezeichnet werden, zum Einsatz. Durch die Faltung des verwendeten Filtermediums kann abhängig von der Faltungshöhe, dem Faltungsabstand und dem Grad des Zusammenstauchens dieser ziehharmonikaähnlichen Faltenpacks der verschiedenen Faltabschnitte des Filtermediums eine Vergrößerung der von dem Luftstrom durchströmten Filterfläche ermöglicht werden. Um entsprechende Filterelemente mit zickzackförmig gefalteten Filtermedien insbesondere montagetechnisch besser handhaben zu können, sind oft Verstärkungselemente an den Seiten des Filterelements entlang dem Filterpack aus dem gefalteten Medium vorgesehen. Diese Armierungselemente dienen der seitlichen Fixierung und Stabilisierung des zickzackförmigen Filtermediums und sind zum Beispiel mittels eines geeigneten Klebers an den seitlichen Kanten des Faltenpacks angebracht. Man spricht auch von Seitenbändern. Das Filterelement mit an den gefalteten Längsseiten streifenförmig angebrachten Armierungen oder Verstärkungen kann auf diese Weise montagetechnisch einfach ohne es zu beschädigen in ein Gehäuse eines Filtermoduls bzw. einer entsprechenden Filteraufnahme, beispielsweise in ein Filtergehäuse oder eine Klimaanlage eines Kraftfahrzeuges, eingefügt werden.

Filter werden ferner in Kraftfahrzeugen eingesetzt, um Partikel aus der Zuluft zu Brennkraftmaschinen abzuscheiden. Diese Filter werden in ihrer Geometrie und den verwendeten Materialien spezifisch für einen bestimmten Kraftfahrzeugtyp vorgesehen. Dies liegt beispielsweise daran, dass die Anforderungen an die Luftdurchsatzmenge, den Strömungswiderstand und die Filterleistung des Luftfilters vom Brennkraftmaschinentyp abhängig sind. Ferner sind die Einbaumöglichkeiten oft sowohl von der Brennkraftmaschine als auch vom Kraftfahrzeugtyp abhängig.

Ein Problem besteht darin, dass bei der Wartung von Kraftfahrzeugen aus Kostengründen manchmal Filterelemente von Fremdherstellern eingesetzt werden, die in der Filterleistung schlechter sind oder nicht genau in den Einbauraum passen. Durch diesen Umbau gelangt dann Luft, die unzureichend gefiltert ist, in den Innenraum oder zu der Brennkraftmaschine.

Aus der EP 2 108 432 A1 ist eine Filteranordnung bekannt, deren Filterelement jeweils in gegenüberliegenden Seitenbändern endständige, d. h. zu einem Kopfbereich des Filterelements hin offene, Ausnehmungen aufweist. In die endständigen Ausnehmungen greifen in einem Montagezustand gehäuseseitige Stäbe ein.

Ferner offenbart die DE 10 2005 048841 B3 eine Filteranordnung, deren Filterelement in seinem Seitenband zwei im Bezug auf eine Höhenrichtung asymmetrisch vorliegende Öffnungen bzw. Löcher aufweist, in die in einem Montagezustand jeweils ein gehäuseseitiger Führungszapfen eingreift, der sich zwischen zwei banachbarten Faltenflächen erstreckt. Um diesen Eingriff zu ermöglichen, muss das Filterelement parallel zu der Faltenlängserstreckung in das Gehäuse eingeschoben werden, in der sich auch die Führungszapfen erstrecken.

Schließlich offenbart die JP 2005 007361 A ein Filterlement, das jeweils zwei Einschitte in sich gegenüberliegenden Seitenbändern aufweist, die dazu dienen, das Filterelement biegbar zu machen, um es quer zur Faltenlängserstreckung in einem nur schwer zugänglichen Montageschacht zu montieren.

### Offenbarung der Erfindung

Der Erfindung liegt die Aufgabe zugrunde, eine verbesserte Filteranordnung mit Filterelement und Gehäuse zur Aufnahme des Filterelements zur Verfügung zu stellen, dessen Filterelement nur in einer bestimmten Orientierung in das Gehäuse einbaubar ist und montageoptimiert ist.
Diese Aufgabe wird durch eine Filteranordnung mit den Merkmalen des unabhängigen Patentanspruchs 1 gelöst.

Die erfindungsgemäße Filteranordnung weist ein Filterelement sowie eine Filteraufnahme auf.

Ein Filterelement weist ein Faltenpack und einen das Faltenpack zumindest teilweise umlaufenden Rahmen auf, wobei der Rahmen wenigstens eine Aussparung für einen Vorsprung eines Gehäuses für das Filterelement umfasst.

Das Faltenpack kann ein zickzackförmig oder wellenförmig gebogenes sich in einer Ebene erstreckendes Filtermedium aufweisen, das an dem Rahmen angeordnet ist. Der Rahmen weist wenigstens eine nutförmige Aussparung zum Eingriff eines Vorsprungs eines Gehäuses auf. Ein zickzackförmig sich gebogen in einer Ebene erstreckendes Filtermedium weist dabei Faltkanten auf, zwischen denen sich bevorzugt gerade Faltabschnitte erstrecken. Die Form entspricht dabei der eines Faltenbalgs. Werden statt der Faltungen oder Knickstellen Rundungen vorgesehen, die direkt oder über gerade Zwischenbereiche ineinander übergehen, ergibt sich eine wellenförmige Filtermediumsgestalt. Unabhängig von der zickzackförmigen oder welligen Gestalt erstreckt sich das Faltenpack insgesamt in einer Ebene.

Zur Stabilisierung des Filtermediums ist ein Rahmen bevorzugt aus einem Kunststoffmaterial vorgesehen. An diesem Rahmen ist das Filtermedium beispielsweise durch Ankleben, Einschieben in eine Nut, mittels Nieten, Klipsen oder dergleichen befestigt. Der Rahmen ermöglicht ein festes und dichtes Anbringen des Filtermediums in einem Gehäuse.

In einer anderen Ausführungsform ist der Rahmen aus demselben Material gebildet wie das Filtermedium.

Das Filterelement ist insbesondere als Innenraumluftfilter für ein Kraftfahrzeug ausgestaltet. Im Betrieb des Filterelements wird durch das Faltenpack in einer vorgegebenen Durchströmrichtung ein zu filterndes Fluid, wie Luft für den Fahrzeuginnenraum, durchgeleitet. Das Filterelement kann ferner ein Motorluftfilter sein. Denkbar ist auch eine Ausgestaltung als Haushaltsfilter.

Das vorgeschlagene Filterelement erlaubt, bei geringem konstruktiven Aufwand den Einsatz herstellerfremder Filterelemente in das Gehäuse zu erschweren. Dadurch kann eine gleichbleibende Qualität der Filterleistung gewährleistet werden.

Die nutförmige Aussparung ist derart ausgebildet, dass der Vorsprung in Richtung zu dem Faltenpack den Rand durchstoßen kann. Die Aussparung ist als Einschnitt von einer Kante des Randes aus ausgebildet. Vorzugsweise hat der Einschnitt mindestens ein Viertel der Höhe des Rahmens, wobei die Höhe des Rahmens im Wesentlichen einer Höhe des Faltenpacks entspricht. Die Höhe des Faltenpacks hängt dabei von der Breite der Faltabschnitte und der Faltungsdichte ab.

Gemäß einer bevorzugten Ausführungsform fasst der Rahmen das Filtermedium randseitig ein, wodurch eine rundherum Abdichtung zwischen Filtermedium und Rahmen erzielt werden kann. Der Rahmen hat dabei eine rechteckförmige Gestalt. Dadurch kann das Filterelement schubladenartig in eine Aufnahme eingeführt werden. Wird das Filterelement flächig in ein Gehäuse eingesetzt, ermöglicht die Rechteckform eine einfache Orientierung und genaue Einpassung des Filterelements.

Der Rahmen des Filterelements umfasst zwei an Faltkantenprofile des Faltenpacks angebrachte Seitenbänder und zwei an Endfaltenabschnitte des Faltenpacks und/oder den Seitenbändern angebrachte Kopfbänder.

Der Rahmen kann materialeinstückig oder auch aus mehreren Elementen gefertigt sein. Beispielsweise ist das Faltenpack von dem Rahmen umspritzt oder umschäumt.

Die Aussparung ist derart an einem Seitenband vorgesehen, dass der Vorsprung zwischen zwei benachbarte Faltenabschnitte in dem Faltenpack eindringen kann.

Bei einer weiteren Ausführungsform ist an jeder Längsseite des Rahmens, beispielsweise an den Seitenbändern, wenigstens eine Aussparung vorgesehen. Die Aussparungen ermöglichen den Eingriff von Vorsprüngen von einem Gehäuse, in das das Filterelement eingesetzt wird. Dadurch kann erreicht werden, dass nur ein Filterelement mit den entsprechenden Aussparungen in das Gehäuse eingesetzt werden kann. Dadurch kann die Verwendung herstellerfremder Filterelemente, die diese Aussparung nicht aufweisen, verhindert werden.

Gemäß einer weiteren Ausführungsform weist der Rahmen wenigstens eine äußere Begrenzungsfläche auf, die mit einer Ebene des Faltenpacks einen Winkel zwischen 0 Grad und 90 Grad einschließt. Zum Beispiel ist der Rahmen wenigstens abschnittsweise außen konisch geformt. Bevorzugt weist er eine äußere Begrenzungsfläche auf, die mit der Ebene in der sich das Filtermedium erstreckt, einen Winkel zwischen 45 und 80 Grad einschließt.

Wird an einem entsprechenden Gehäuse für die Aufnahme des Filterelements eine entsprechend schräge Fläche vorgesehen, kann wiederum verhindert werden, dass Filterelemente, die diese Schräge nicht aufweisen, also eher quaderförmig und nicht konisch ausgebildet sind, eingesetzt werden können, da diese dann mit der Schräge kollidieren.

Die Begrenzungsfläche ist vorzugsweise Teil eines Seitenbandes. Dann schneidet die Begrenzungsfläche die Faltenprofile.

Ein geeignetes Gehäuse zur Aufnahme eines Filterelements gemäß der Erfindung hat wenigstens einen Vorsprung, der in die Aussparung des Rahmens eingreift, wenn das Filterelement in das Gehäuse eingesetzt ist.

Das Gehäuse hat vorzugsweise einen weiteren Vorsprung, welcher an einem Stab angeordnet ist, der insbesondere lösbar in dem Gehäuse angebracht ist.

Ein Gehäuse zur Aufnahme eines Filters kann ferner wenigstens einen ersten Vorsprung aufweisen, der in die Aussparung des Rahmens eingreift, wenn das Filterelement in das Gehäuse eingesetzt ist und/oder wenigstens einen zweiten Vorsprung aufweisen, der in die Falten bzw. Buchten des Filtermediums eingreift, wenn das Filterelement in das Gehäuse eingesetzt ist. Der erste Vorsprung verhindert dabei, dass ein Filterelement in das Gehäuse eingesetzt wird, das keine entsprechende Aussparung aufweist. Die Verwendung herstellerfremder ungeeigneter Filterelemente wird dadurch verhindert. Der zweite Vorsprung greift in das Filtermedium ein, wenn dieses in das Gehäuse eingesetzt ist. Dadurch können nur Filterelemente in das Gehäuse eingesetzt werden, die Filtermedien mit entsprechenden Falten bzw. Buchten aufweisen. Ein Filterelement kann somit auch dann nicht engesetzt werden, wenn die Aussparungen im Rahmen vorhanden sind, jedoch ein einfach ebenes Filtermedium ohne wellige bzw. faltenbalgförmige Kontur verwendet wird.

Der zweite Vorsprung weist bevorzugt einen keilförmigen Querschnittsteil zum Eingriff in das Filtermedium auf. Die spitze Seite des keilförmigen Querschnittsteils verläuft beispielsweise in Richtung einer Durchströmrichtung des Filterelements. Dadurch drückt sich der Keil zwischen die Falten bzw. Wellen des Filtermediums und drückt diese zur Seite. Ein Aufsetzen auf die Falten bzw. Wellen und damit ein Verbeulen des Filtermediums wird somit verhindert.

Bevorzugt sind mehrere zweite Vorsprünge in einem Abstand voneinander vorgesehen, der dem Einfachen oder Mehrfachen des Abstandes der Wellen bzw. Falten entspricht. Dadurch wird verhindert, dass Filtermedien eingesetzt werden, die Wellen oder Falten in einem falschen Abstand aufweisen. Es wird somit eine Codierung über die Teilung in Form von Wellen bzw. Falten des Filtermediums erreicht. Fremdhergestellte Filterelemente mit der Falschen Teilung können nicht eingesetzt werden. Dadurch wird vermieden, dass beim Einsatz eines falschen Filterelements beispielsweise bei der Filterung der Verbrennungsluft eines Motors, die Zuluft unzureichend gefiltert wird oder der Strömungswiderstand des Filterelements zu groß ist, was zu Schäden am Verbrennungsmotor oder zu schlechten Abgaswerten führen kann.

Ferner kann der zweite Vorsprung an einem Stab angeordnet sein, der insbesondere lösbar am Gehäuse angebracht ist. Der Stab erstreckt sich dabei bevorzugt parallel zu den Falten bzw. Wellen des Filtermediums eines einzusetzenden Filterelements. Ist der Stab lösbar angebracht, bietet dies den Vorteil, dass die Position des zweiten Vorsprungs durch Einsetzen des Stabes an einer gewünschten Stelle verändert werden kann. Dadurch kann das Gehäuse für die Aufnahme von Filterelementen einer bestimmten Geometrie flexibel konfiguriert werden. Im Falle von mehreren zweiten Vorsprüngen kann somit eine Anpassung an den Falten- bzw. Wellenabstand eines einzusetzenden Filtermediums erfolgen. Der Stab kann rastbar an dem Gehäuse befestigt sein.

Der Innenraum des Gehäuses kann ferner eine abgeschrägte Wand haben, welche mit einer Auflagefläche für das Faltenpack oder mit einer Ebene des Faltenpacks einen Winkel zwischen 0 Grad und 90 Grad einschließt.

Das Gehäuse ist zum Beispiel innen bereichsweise konisch ausgeführt. Dadurch kann ein ebenfalls konisch geformtes Filterelement korrekt eingesetzt werden, während ein herstellerfremdes einfach quaderförmiges Filterelement nicht eingesetzt werden kann. Bevorzugt ist dabei analog zum Rahmen des Filterelements am Gehäuse ebenfalls eine schräge Begrenzungsfläche vorgesehen, die dann bei aufgenommenem Filterelement an der schrägen Begrenzungsfläche des Filterelements zum Anliegen kommt. Es wird dadurch auch der Einbau des Filterelements entgegen einer vorgesehenen Durchströmrichtung verhindert, was beispielsweise die Betriebssicherheit des Filters erhöht und den Einbau vereinfacht. Man erreicht somit auch eine verdrehsichere Anordnung.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
Fig. 1: eine schematische perspektivische Darstellung eines Filterelements;
Fig. 2: eine schematische perspektivische Darstellung eines Gehäuses zur Aufnahme des Filterelements;
Fig. 3: eine schematische Querschnittsdarstellung eines Gehäuses zur Aufnahme des Filterelements;
Fig. 4: eine weitere schematische Querschnittsdarstellung eines Gehäuses zur Aufnahme des Filterelements; und
Fig. 5: eine weitere schematische perspektivische Darstellung eines Filterelements.

In den Figuren bezeichnen dieselben Bezugszeichen gleiche oder funktionsgleiche Elemente, soweit nichts Gegenteiliges angegeben ist.

### Ausführungsformen der Erfindung

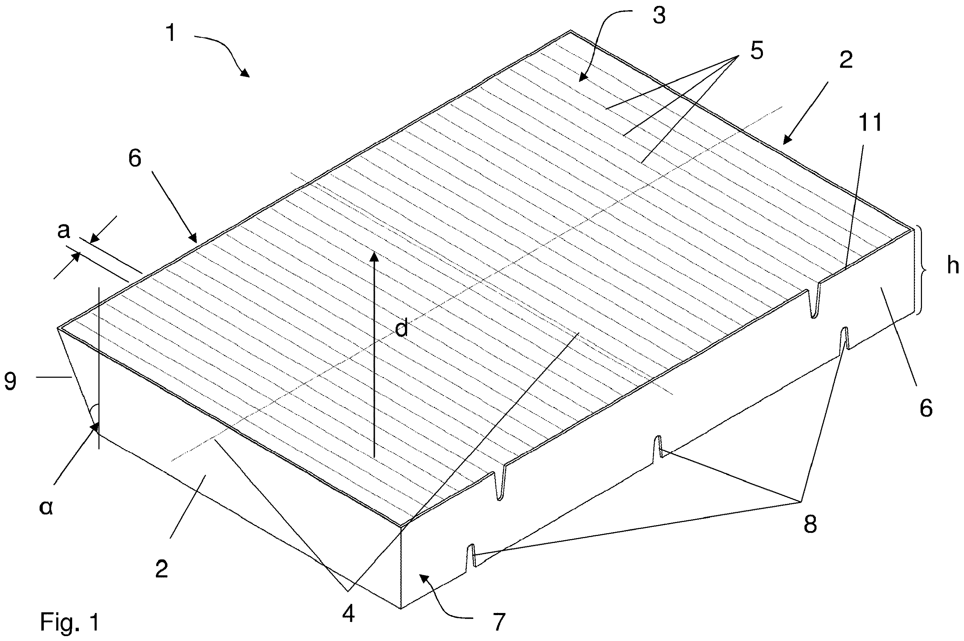

Fig. 1 zeigt eine schematische perspektivische Darstellung einer Ausführungsform eines Filterelements 1. Das Filterelement 1 weist ein Faltenpack 3 und einen Rahmen 7 auf. Der Rahmen 7 ist in der Form von einem Quader abgeleitet, wobei eine seitliche Begrenzungsfläche 9 etwas geneigt angeordnet ist. Dadurch weist der Rahmen 7 eine konische Form auf und hat einen trapezförmigen Querschnitt parallel zu den Faltungen 5 . Man erkennt, dass die Begrenzungsfläche 9 mit einer Durchströmrichtung durch das Faltenpack 3 bzw. den Luftfilter 1 einen Winkel α einschließt. Der Winkel α hat zwischen 10 und 45 Grad. Der Rahmen 7 ist beispielsweise aus einem Kunststoff gebildet. Der Rahmen 7 fasst bei diesem Ausführungsbeispiel das Faltenpack 3 seitlich ein.

Das Faltenpack 3 umfasst zickzackförmig gefaltetes Filtermaterial als Filtermedium. Das Filtermaterial kann ein Filter-Vlies-Material sein, das für die Filterung von Rohfluid, beispielsweise Innenraumluft, Außenluft oder auch Verbrennungsluft für Kraftfahrzeuge geeignet ist. Das Faltenpack 2 kann dabei ein mehrlagiges Filtermaterial umfassen, bei dem Absorberpartikel zwischen verschiedenen Schichten angeordnet sind. Insofern ist das Filtermedium bei diesem Ausführungsbeispiel als Faltenbalg oder Faltenpack 3 ausgeführt, der sich in einer Ebene 4 erstreckt. Zwischen den Faltungen 5 erstrecken sich dabei im wesentlichen gerade rechteckige Faltbschnitte des Filtermediums. Das Filtermedium weist dadurch Falten auf, wobei in der Figur 1 beispielhaft obere Faltkanten 5 angedeutet sind. Der Abstand zwischen jeweils zwei Faltkanten 5 des Filtermediums ist mit a markiert.

Der Rahmen 7 hat hier zwei Seitenbänder 6, welche auf nicht dargestellte Faltenprofile des Faltenpacks 3 angebracht sind, und zwei Kopfbänder 2, welche zusammen mit den Seitenbändern 6 das Faltenpack 3 umlaufen.

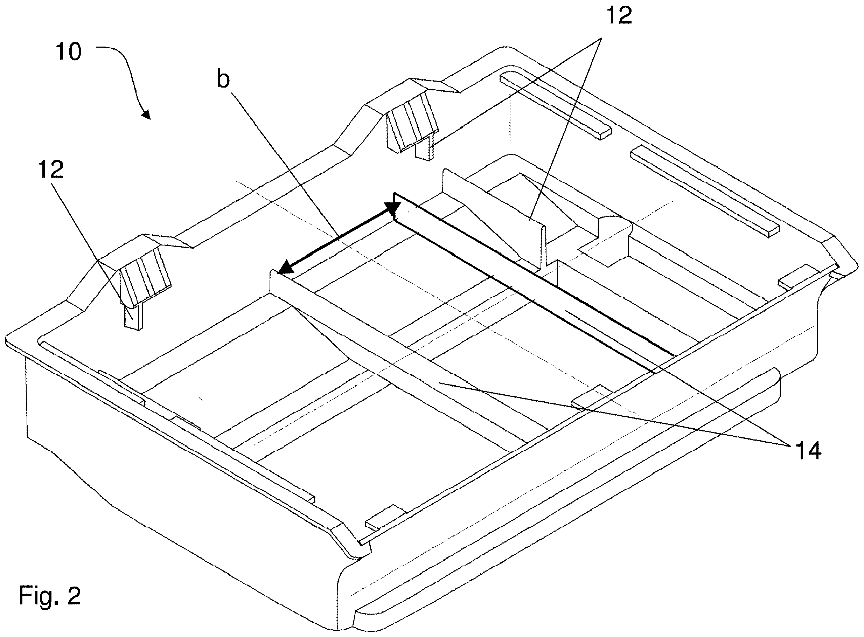

Der Rahmen 7 des Filterelements 1 weist Aussparungen 8 auf. Diese Aussparungen 8 sind hier in Form von Nuten oder Einschnitten ausgebildet. Die Aussparungen 8 sind vorgesehen, bei der Aufnahme des Filterelements 1 in einem Gehäuse mit Vorsprüngen in Eingriff zu kommen. Ausgehend von einer jeweiligen Kante 11 des Rahmens 7 oder des Seiten- oder Kopfbandes 6, 2 verläuft die Aussparung 8 keilförmig. Vorzugsweise reicht der keilförmige Einschnitt 8 mindestens um ein Drittel der Höhe h des Filterelements 1 in den Rahmen 7. Dadurch kann dann nur ein Filterelement 1 aufgenommen werden, das diese Aussparungen 8 aufweist. Bei einem Filterelement 1 dessen Rahmen 7 die Aussparungen 8 nicht aufweist, ist auf Grund der Kollision mit den Vorsprüngen keine Aufnahme im Gehäuse möglich. Dies wird im Zusammenhang mit dem Gehäuse, das anhand von Figur 2 beschrieben wird, verständlich.

Fig. 2 zeigt eine schematische perspektivische Darstellung einer Ausführungsform eines Gehäuses 10 zur Aufnahme eines Filterelements 1. Das Gehäuse 10 ist eingerichtet im Inneren das Filterelement 1 aufzunehmen. Erste Vorsprünge 12 erstrecken sich im Gehäuse 10 und sind vorgesehen, in die Aussparungen 8 des Rahmens 7 des Filterelements 1, wie es beispielsweise in der Figur 1 dargestellt ist, zu greifen, wenn dieses im Gehäuse 10 aufgenommen wird.

Zweite Vorsprünge 14 sind jeweils an einem Stab 15 angeordnet und erstrecken sich durch das Gehäuse 10 parallel zu den Falten eines aufzunehmenden Filterelements 1. Die Vorsprünge 14 greifen dann bei aufgenommenem Filterelement 1 in die Falten 5 des Filtermediums 3 ein. Dadurch kann ein Filtermedium 3 ohne Falten 5 nicht aufgenommen werden. Um das Eingreifen zwischen die Falten 5 bei der Aufnahme des Filterelements 1 zu erleichtern, sind die zweiten Vorsprünge 14 keilförmig ausgeführt, so dass sie messerschneidenartig zwischen die Falten 5 greifen können. Die zweiten Vorsprünge 14 sind bei dieser Ausführungsform jeweils an einem Stab angebracht, der lösbar am Gehäuse 10 angeordnet ist. Dadurch kann die Position des Stabs variiert werden. Die zweiten Vorsprünge 14 sind in einem Abstand b vorgesehen, der einem mehrfachen des Faltenabstands a entspricht. Dadurch wird verhindert, dass Filtermedien 1 in das Gehäuse 10 eingesetzt werden, die Wellen oder Falten 5 in einem falschen Abstand aufweisen. Es wird somit eine Codierung über die Teilung in Form von Wellen bzw. Falten 5 des Filtermediums 1 erreicht. Fremdhergestellte Filterelemente 1 mit der Falschen Teilung können nicht eingesetzt werden.

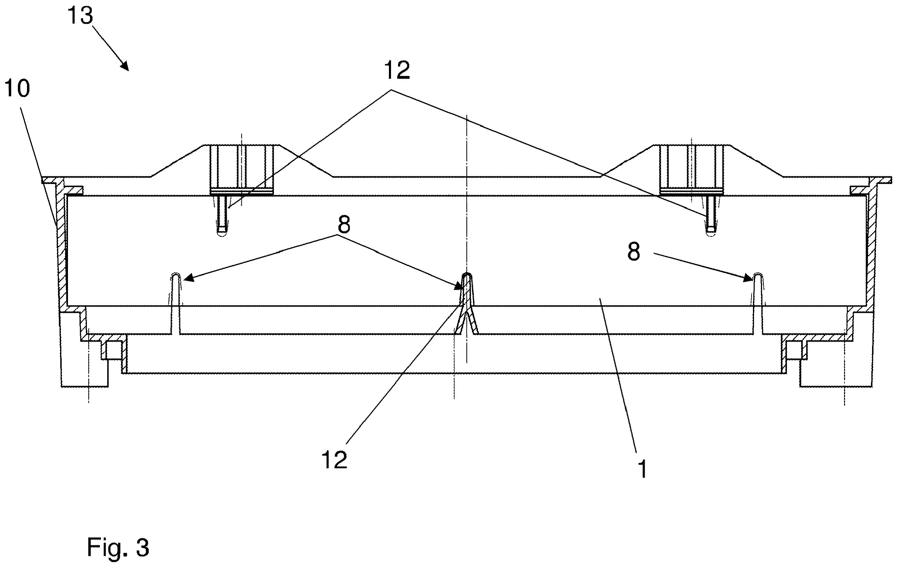

Die Figur 3 zeigt eine Querschnittsdarstellung einer Filteranordnung 13 mit einem in ein Gehäuse 10 eingesetzes Filterelement 1. Man erkennt, wie die Vorsprünge 14 in die Ausparungen 8 in Richtung zu dem Faltenpack des Filterelements eingreifen. Der Querschnitt des Filterelements 1 und des Gehäuses 10 ist rechteckig. Zum Beispiel kann das Filterelement 1 mit einem der Kopfbänder voran in das kastenförmige Gehäuse 10 eingeschoben werden. Der zweite in der Figur 2 angedeutete Steg ist hier entfernt. Somit greifen in die unteren linke und rechte Aussparung 8 keine Vorsprünge ein.

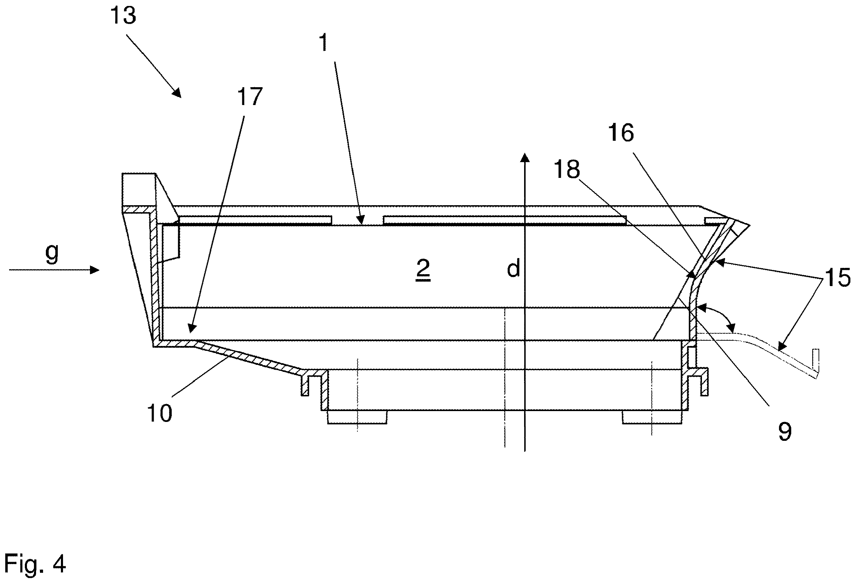

In der Figur 4 ist eine seitliche Schnittansicht der Filteranordnung 13 mit eingesetztem Filterelement 1 dargestellt. Man blickt dabei auf eines der Seitenbänder 2. Es ist ferner eine mögliche Durchströmrichtung d für das zu filternde Fluid, wie Luft angegeben. Die Ebene des Filterlelements 1 verläuft in der Darstellung der Figur 4 horiziontal. Das Gehäuse 10 hat eine abgeschrägte innere Wand 16, die an die schräge Begrenzungsfläche 9 des Rahmens des Filterelements 1 angepasst ist. Das Filterelement 1 liegt auf der Auflagefläche 17 in den Gehäuse. Durch die schräge Begrenzungsfläche 9 und die schräge Wand 16 wird verhindert, dass das Filterelement 1 in falscher Orientierung in das Gehäuse 10 eingesetzt wird.

Die abgeschrägte Wand ist bei dem dargestellten Ausführungsbeispiel Teil einer Verschlussklappe 15, die eine Einbau- und Entnahmeöffnnung des Gehäuses 10 verschließt oder freigibt. Dies ist durch die runden Pfeile angedeutet. Die innenseitige schräge Wand 16 bzw. die Verschlussklappe 15 ist gerundet ausgeführt. Dadurch drückt die Biegung 18 auf die Begrenzungsfläche 9 und fixiert das Filterelement 1 in dem Gehäuse 10, wenn die Klappe 15 verschlossen ist..

Bevorzugt ist die Filteranordnung 13 derart im Fahrzeug angeordnet, dass die Einschubrichtung mit der Ebene des Faltenpacks zusammenfällt und senkrecht, also parallel zur Erdbeschleunigung g verläuft. Dann ist ferner die Verschlussklappe 15 unten vorgesehen, sodass die Schräge 9 des Rahmens 16 einen Ablauf für in dem Filterlement 1 gesammelte Flüssigkeit bildet. Die Flüssigkeit kann zum Beispiel Spritz- oder Kondenswasser sein.

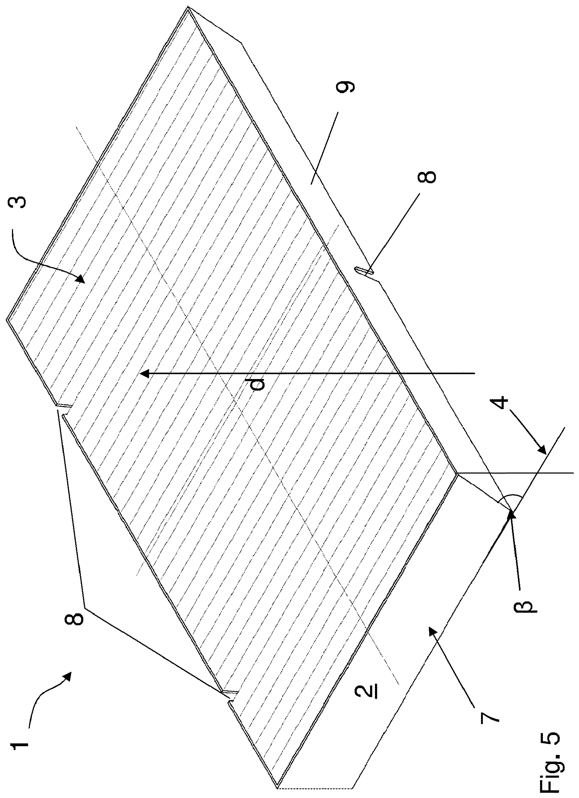

Die Figur 5 zeigt eine weitere perspektivische Ansicht des Filterlements 1. Es ist die Durchströmrichtung d angedeutet. Man blickt im Vergleich zur Figur 1 auf das (hintere) als schräge Begrenzungsfläche 9 des Rahmens 7 ausgebildete Seitenband. Die Aussparungen 8 sind sowohl an dem schrägen Seitenband wie auch an dem anderen (in der Figur 5 verdeckten) Seitenband vorgesehen. Es sind mindestens zwei Aussparungen 8 an dem Rahmen 7 vorgesehen. Die Figur 5 zeigt ferner den Winkel β, den die Begrenzungsfläche 9 bzw. das entsprechende Seitenband mit der Filterelementebene 4 einschließt. Es gilt dabei α + β = 90°.

Obwohl die vorliegende Erfindung anhand bevorzugter Ausführungsbeispiele näher erläutert wurde ist sie nicht darauf beschränkt, sondern vielfältig modifizierbar. Es können andere als die dargestellten Geometrien für Filterelemente und insbesondere der Kopfbänder gewählt werden. Dabei können die Gegebenheiten am Einbauort des Filters berücksichtigt werden. Die genannten Materialen für den Rahmen bzw. das Seiten- und Kopfbandmaterial und das Filtermedium sind ebenfalls nur beispielhaft zu verstehen. Die Aussparungen können beliebige Formen haben, z.B rund, oval, dreieckig oder rechteckig sein. Die Aussparungen können auch in der Art einer Öffnung oder eines Lochs in dem Rahmen ausgebildet sein.

## Patentansprüche

1. Filteranordnung (13) mit einem Gehäuse (10) und mit einem Luftfilter (1), wobei der Luftfilter (1) ein Faltenpack (3) und einen das Faltenpack (3) zumindest teilweise umlaufenden Rahmen (7) hat, wobei der Rahmen (7) mit einer rechteckigen Gestalt wenigstens eine Aussparung (8) zum Eingriff eines Vorsprungs (12) des Gehäuses (10) aufweist, **dadurch gekennzeichnet, dass** die Aussparung (8) eine nutförmige Aussparung (8) ist, die als Einschnitt von einer Kante (11) des Randes (7) ausgebildet ist, die derart ausgebildet ist, dass der Vorsprung (12) in Richtung zu dem Faltenpack (3) den Rand (7) durchstoßen kann und der Luftfilter (1) schubladenartig in das Gehäuse (10) eingeführt werden kann, wobei der Rahmen (7) zwei an Faltkantenprofilen des Faltenpacks (3) angebrachte Seitenbänder (6) und zwei an Endfaltenabschnitten des Faltenpacks (3) und/oder den Seitenbändern (6) angebrachte Kopfbänder (2) umfasst, wobei die Aussparung (8) derart an einem Seitenband (6) vorgesehen ist, dass der Vorsprung (12) zwischen zwei benachbarte Faltenabschnitte in dem Faltenpack (3) eindringen kann, wobei das Gehäuse (10) mit wenigstens einem Vorsprung (12) in die Aussparung (8) des Rahmens (7) eingreift, wenn der Luftfilter (1) in das Gehäuse (10) eingesetzt ist.

2. Filteranordnung (13) nach Anspruch 1, **dadurch gekennzeichnet, dass** der Rahmen (7) wenigstens eine äußere Begrenzungsfläche (9) aufweist, die mit einer Ebene (4) des Faltenpacks (3) einen Winkel (β) zwischen 0 Grad und 90 Grad einschließt.

3. Filteranordnung (13) nach Anspruch 1 oder 2, ferner mit mindestens einem weiteren Vorsprung (14), welcher an einem Stab angeordnet ist, der insbesondere lösbar in dem Gehäuse (10) angebracht ist.

4. Filteranordnung (13) nach einem der Ansprüche 1 - 3, wobei der Innenraum des Gehäuses (10) eine abgeschrägte Wand (16) aufweist, welche mit einer Auflagefläche (17) für den Luftfilter (1) oder einer Ebene (4) des Faltenpacks (3) einen Winkel (β) zwischen 0 Grad und 90 Grad einschließt.

## Claims

1. Filter arrangement (13) having a housing (10) and having an air filter (1), wherein the air filter (1) has a pleated pack (3) and a frame (7) surrounding the pleated pack (3) at least partially, wherein the frame (7) with a rectangular shape features at least one recess (8) for allowing engagement of a protrusion (12) of the housing (10), **characterized in that** the recess (8) is a groove-shaped recess (8) which is designed as a cutout of an edge (11) of the frame (7) which is designed in such a way that the protrusion (12) can pierce the frame (7) in the direction towards the pleated pack (3) and the air filter (1) can be inserted into the housing (10) in a drawer-like manner, wherein the frame (7) comprises two lateral strips (6) attached to fold edge profiles of the pleated pack (3) and two headbands (2) attached to end fold sections of the pleated pack (3) and/or to the lateral strips (6), wherein the recess (8) is provided on a lateral strip (6) in such a way that the protrusion (12) can penetrate between two adjacent folding sections in the pleated pack (3), wherein the housing (10) engages with at least one protrusion (12) in the recess (8) of the frame (7) when the air filter (1) is inserted into the housing (10).

2. Filter arrangement (13) according to claim 1, **characterized in that** the frame (7) features at least one outer boundary surface (9) which encloses with a plane (4) of the pleated pack (3) an angle (β) between 0 degree and 90 degrees.

3. Filter arrangement (13) according to claim 1 or 2, furthermore with at least one more protrusion (14) which is disposed on a rod which is in particular detachably mounted in the housing (10).

4. Filter arrangement (13) according to one of the claims 1 to 3, wherein the interior space of the housing (10) features a beveled wall (16) which encloses with a contact surface (17) for the air filter (1) or a plane (4) of the pleated pack (3) an angle (β) between 0 degree and 90 degrees.

## Revendications

1. Agencement de filtre (13) comportant un boîtier (10) et comportant un filtre à air (1), le filtre à air (1) ayant un ensemble de plis (3) et un cadre (7) entourant au moins en partie l'ensemble de plis (3), le cadre (7) avec une forme rectangulaire présentant au moins un évidement (8) pour permettre l'engagement d'une saillie (12) du boîtier (10), **caractérisé en ce que** l'évidement (8) est un évidement (8) en forme de rainure qui est réalisé en tant qu'entaille d'un bord (11) du cadre (7) qui est conçu de telle manière que la saillie (12) peut percer le cadre (7) en direction de l'ensemble de plis (3) et le filtre à air (1) peut être inséré dans le boîtier (10) à la manière d'un tiroir, le cadre (7) comprenant deux bandes latérales (6) fixées sur des profils d'arête de pliage de l'ensemble de plis (3) et deux bandeaux (2) fixés sur des sections de plis d'extrémité de l'ensemble de plis (3) et/ou sur les bandes latérales (6), l'évidement (8) étant prévu sur une bande latérale (6) de telle manière que la saillie (12) peut pénétrer entre deux sections de plis dans l'ensemble de plis (3), le boîtier (10) s'engageant avec au moins une saillie (12) dans l'évidement (8) du cadre (7) lorsque le filtre à air (1) est inséré dans le boîtier (10)..

2. Agencement de filtre (13) selon la revendication 1, **caractérisé en ce que** le cadre (7) présente au moins une surface de limitation extérieure (9) qui, avec un plan (4) de l'ensemble de plis (3), comprend un angle (β) entre 0 degré et 90 degrés.

3. Agencement de filtre (13) selon la revendication 1 ou 2, comportant en outre au moins une autre saillie (14) qui est disposée sur une tige qui est en particulier montée de manière amovible dans le boîtier (10).

4. Agencement de filtre (13) selon l'une des revendications 1 à 3, l'espace intérieur du boîtier (10) présentant une paroi biseautée (16) qui, avec une surface d'appui (17) pour le filtre à air (1) ou un plan (4) de l'ensemble de plis (3), comprend un angle (β) entre 0 degré et 90 degrés.
